(19) Europäisches Patentamt / European Patent Office / Office européen des brevets

(11) **EP 2 635 813 B1**

(12) **FASCICULE DE BREVET EUROPEEN**

(45) Date de publication et mention de la délivrance du brevet:
**27.05.2015 Bulletin 2015/22**

(21) Numéro de dépôt: **11776438.1**

(22) Date de dépôt: **28.10.2011**

(51) Int Cl.:
*F04B 9/12* (2006.01)   *F04B 9/123* (2006.01)
*F04B 49/08* (2006.01)

(86) Numéro de dépôt international:
**PCT/EP2011/068996**

(87) Numéro de publication internationale:
**WO 2012/059427 (10.05.2012 Gazette 2012/19)**

(54) **SYSTEME DE COMPRESSION A GAZ**

GASKOMPRESSIONSSYSTEM

GAS COMPRESSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.11.2010 FR 1059173**

(43) Date de publication de la demande:
**11.09.2013 Bulletin 2013/37**

(73) Titulaire: **Commissariat à l'Énergie Atomique et aux Énergies Alternatives 75015 Paris (FR)**

(72) Inventeurs:
• **FOURNERON, Yannick**
  **F-01660 Vandeins (FR)**
• **PINTON, Eric**
  **F-38130 Echirolles (FR)**

(74) Mandataire: **Lebkiri, Alexandre Cabinet Camus Lebkiri 25, Rue de Maubeuge 75009 Paris (FR)**

(56) Documents cités:
**CH-A- 389 407       US-A- 5 490 766
US-A1- 2003 051 486**

**Description**

L'invention concerne un régulateur pour un système de compression à gaz ainsi qu'un procédé mettant en oeuvre un tel système, voir US5490766, qui décrit le préambule de la revendication 1.

On connait différents procédés pour comprimer un gaz, notamment à l'aide d'énergie de compression fournie par une alimentation électrique, par une combustion de carburant fossile ou par un second gaz dénommé gaz moteur.

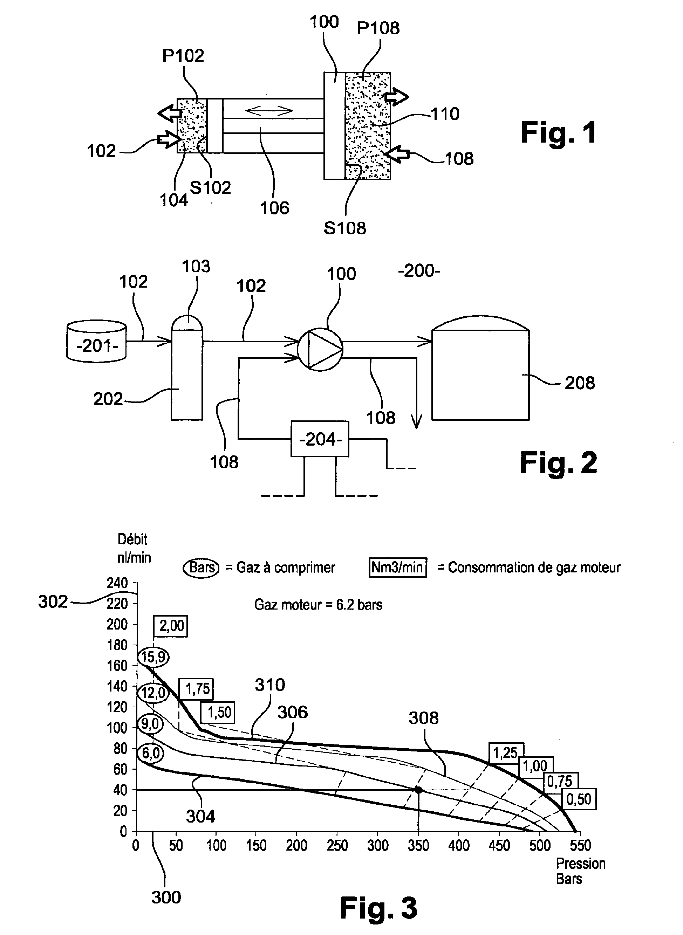

Dans ce dernier cas, le principe de la compression peut être décrit à l'aide d'un compresseur 100 (figure 1) qui admet le gaz 102 à comprimer dans un cylindre 104, un piston 106 coulissant dans ce cylindre 104 de façon à réduire son volume et accroître ainsi la pression du gaz 102 admis.

Pour commander les coulissements du piston 106, un gaz moteur 108 est admis dans un second cylindre 110 au sein duquel peut également coulisser le piston 106 en offrant, au gaz moteur 108, une surface S108 de contact plus importante que la surface S102 de contact offerte au gaz 102 à comprimer dans le compartiment 104.

De ce fait, le piston 106 se déplace entre les deux cylindres 104 et 110 afin de maintenir un équilibre tel que, pour, une pression P108 dans le cylindre 110, il entraîne une pression P102 dans le cylindre 104 telle que :

$$P108 * S108 = P102 * S102$$

Pendant la phase de compression du gaz à comprimer, il est ainsi possible d'obtenir une force appliquée sur S108 nettement supérieure à celle de contre pression en S102 et de mettre en oeuvre la fonction de compression du gaz 102 à des pressions très élevées à partir d'une pression motrice P108 nettement plus faible.

Pendant la phase d'admission du gaz à comprimer, le phénomène inverse se produit. Le gaz moteur 108 est détendu, généralement à la pression atmosphérique, et le gaz à comprimer 102 est introduit dans le cylindre 104. La force appliquée sur S102 est nettement supérieure à celle de contre pression en S108 et permet de mettre en oeuvre la fonction d'admission du gaz à comprimer 102 et d'évacuation du gaz moteur 108.

L'enchainement des phases d'admission et de compression déplacent le piston 106 dans un mouvement alternatif de va et vient.

En référence à la figure 2, il est connu de mettre en oeuvre le principe de compression par gaz moteur précédemment décrit dans un système 200 comprenant une source 201 du gaz 102 à comprimer associée à un réservoir 202 tampon permettant de réguler l'alimentation du compresseur 100 en gaz 102 à comprimer. De fait, la source de gaz 201 à comprimer peut délivrer ledit gaz 102 avec un débit variable dépendant de la capacité de production du générateur de gaz à comprimer comme par exemple un générateur d'hydrogène et d'oxygène par électrolyse de l'eau ou par reformage. La source 204 du gaz moteur 108 met en oeuvre une pression correspondant à la pression du gaz 108 dans le réseau de distribution auquel est raccordé le compresseur 100.

Un pressostat 103 mesure la pression du gaz 102 se trouvant dans le réservoir 202 tampon de façon à déclencher le compresseur 100 dès lors que ladite pression 102 atteint une valeur seuil. Dès que le compresseur 100 est déclenché, la pression du gaz 102 se trouvant dans le réservoir 202 tampon diminue car le débit de production 201 est inférieur au débit de sortie du compresseur. Dans ce cas, le compresseur 100 est stoppé à un seuil bas de façon à accroître ladite pression du gaz 102 par l'admission en 202 de nouveaux gaz. En d'autres termes, le surpresseur 100 fonctionne par à-coup. La vitesse de déplacement de son piston est élevée et requiert une consommation en gaz moteur importante.

En outre, une vitesse de déplacement élevée du piston impacte nécessairement la durée de vie du compresseur et la consommation en gaz moteur.

Après son passage dans le compresseur 100, le gaz 102 comprimé est stocké dans un réservoir 208 à haute pression, cette haute pression augmentant au fur et à mesure de la compression du gaz 102 dans ledit réservoir 208.

Dans ce contexte, l'invention se propose de résoudre les problèmes rencontrés par les systèmes de compression à gaz de l'art antérieur susmentionnés. Plus particulièrement, l'invention vise à proposer un système de compression dont le rendement énergétique, c'est-à-dire la consommation en gaz moteur, est optimisé et dont la durée de vie est accrue. À cette fin, la présente invention concerne un système de compression à gaz comprenant un compresseur muni d'au moins un premier cylindre et un second cylindre associés de telle sorte qu'un gaz à comprimer admis à une pression d'admission dans le premier cylindre soit comprimé par l'admission d'un gaz moteur dans le second cylindre, ledit système comprenant des moyens de contrôle de la pression du gaz moteur lors de son introduction dans le second cylindre, caractérisé en ce que les moyens de contrôle comprennent:

- un détecteur de pression pour mesurer la pression du gaz à comprimer lors de son admission dans le premier cylindre, et
- un régulateur pour ajuster le débit de gaz moteur dans le second cylindre de telle sorte que la pression du gaz à comprimer soit maintenue à une pression constante lors de son admission dans le premier cylindre.

Grâce à l'invention, la pression dans le réservoir tampon contenant le gaz à comprimer est maintenue constante lors de son admission dans le premier cylindre de sorte que le débit de gaz entrainé par le compresseur soit égal au débit de gaz produit à la source. Par conséquent, les déplacements du piston de transmission de pression sont constants à une fréquence minimale.

Plus particulièrement, une fréquence de déplacement minimale du piston du compresseur confère au compresseur une durée de vie plus élevée et une consommation du gaz moteur minimale puisque le piston ce déplace plus lentement.

Le système selon l'invention peut également présenter une ou plusieurs des caractéristiques ci-dessous, considérées individuellement ou selon toutes les combinaisons techniquement possibles.

Selon une réalisation avantageuse, le système comporte une source de gaz à comprimer située en amont du premier cylindre, les moyens de contrôle comprenant des moyens pour maintenir la pression constante du gaz à comprimer en entrée du premier cylindre à une pression égale à la pression de production de la source du gaz à comprimer.

Une pression en entrée du premier cylindre maximale (i.e. égale à la pression de la source de gaz à comprimer) est particulièrement avantageuse car il apparaît que la quantité de gaz moteur requise pour comprimer un gaz décroit lorsque la pression du gaz à comprimer s'accroît, comme représenté à la figure 3 qui illustre la variation de pression (axe des abscisses 300, en bars) d'un gaz comprimé en sortie d'un compresseur en fonction du débit (axe des ordonnées 302, en nl/min) de gaz à comprimer en entrée du compresseur - pour une même pression du gaz moteur (6,2 bars) et pour différentes pressions du gaz à comprimer, à savoir: 6 bars (courbe 304), 9 bars (courbe 306), 12 bars (courbe 308), et 15,9 bars (courbe 310).

En considérant par exemple un débit de 42 nl/min de gaz comprimé, la consommation de gaz moteur - représenté dans des carrés en $Nm^3$/min - est pratiquement accrue de 50% entre une alimentation en gaz à comprimer à 9 bars (1,5 $Nm^3$/min) et une alimentation en gaz à comprimer à 12 bars (1,15 $Nm^3$/min).

Il apparaît que la réduction de la consommation du gaz moteur améliore le rendement énergétique du compresseur, mesuré par un taux de compression représentatif de l'énergie transmise par le gaz moteur vers le gaz à comprimer.

Typiquement, ce rendement de compression peut être défini dans un cycle de compression comme le rapport entre, d'une part, l'énergie fournie au gaz à comprimer par le compresseur et, d'autre part, l'énergie fournie au compresseur par le gaz moteur.

En outre, lorsque le gaz à comprimer est maintenu, en entrée du compresseur, à une pression constante égale à la pression de production, les déplacements du piston de transmission de pression sont moindres en fréquence. Ainsi, la durée de vie du compresseur est accrue et la consommation du gaz moteur est minimale.

Selon une réalisation, les moyens de contrôle comprennent un réservoir tampon de gaz à comprimer, situé en aval de la source du gaz à comprimer et en amont du premier cylindre, la pression du gaz à comprimer étant constante dans ledit réservoir tampon. Pour maintenir une pression de gaz à comprimer constante dans le réservoir tampon, on ajuste la pression du gaz moteur.

Dans une réalisation, le réservoir tampon est formé par des conduits de distribution du gaz à comprimer, la pression du gaz à comprimer étant constante dans une section desdits conduits de distribution.

Selon une réalisation, le détecteur de pression est associé à une sonde située dans le réservoir tampon.

Dans une réalisation, le système comprend des moyens pour maintenir une pression du gaz à comprimer en entrée du premier cylindre comprise préférentiellement entre 5 et 30 bars.

Selon une réalisation, la source du gaz à comprimer comprend un générateur de gaz.

L'invention concerne également un procédé de compression à gaz mettant en oeuvre un système conforme à l'une des réalisations précédentes, ce système comprenant un premier cylindre et un second cylindre associés de telle sorte qu'un gaz à comprimer admis à une pression d'admission dans le premier cylindre soit comprimé par l'admission d'un gaz moteur dans le second cylindre, ledit système comprenant des moyens de contrôle de la pression du gaz moteur lors de son introduction dans le second cylindre, caractérisé en ce qu'il comprend les étapes suivantes:

- l'étape pour un détecteur de pression de mesurer la pression du gaz à comprimer lors de son admission dans le premier cylindre, et
- l'étape pour un régulateur d'ajuster le débit de gaz moteur dans le second cylindre de telle sorte que la pression du gaz à comprimer soit constante lors de son admission dans le premier cylindre.

D'autres caractéristiques et avantages de l'invention apparaîtront à la lumière de la description ci-dessous, effectuée à titre illustrative et non limitatif, en référence aux figures ci-jointes sur lesquelles :

- à la figure 1, déjà décrite, est représenté schématiquement le fonctionnement d'un compresseur à gaz connu,
- à la figure 2, déjà décrite, est représenté schématiquement le fonctionnement d'un système connu muni du compresseur décrit à la figure 1,
- à la figure 3 est illustrée la variation de consommation d'un gaz moteur en fonction de la pression et du débit de gaz comprimé dans un compresseur tel que décrit à la figure 1,
- à la figure 4 est représenté schématiquement le fonctionnement d'un système conforme à l'invention et,
- à la figure 5 est représentée une comparaison des rendements d'un système connu vis-à-vis d'un système conforme à l'invention en fonction du taux de compression du système.

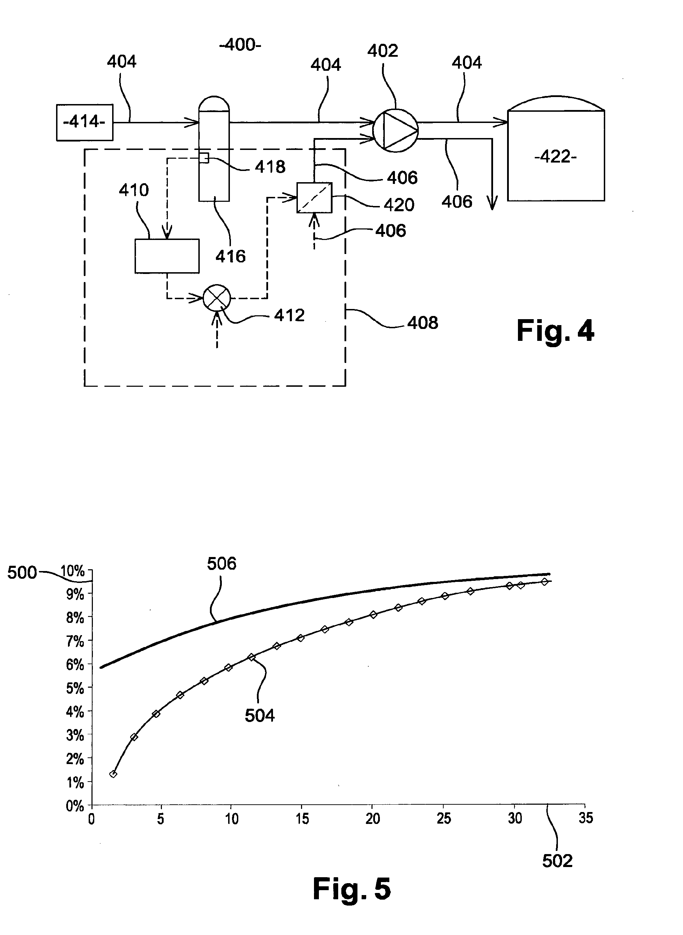

En référence à la figure 4 est représenté un système 400 de compression à gaz conforme à l'invention, à savoir muni d'un compresseur 402 comprenant un premier cylindre et un second cylindre - non représentés - associés de telle sorte qu'un gaz 404 à comprimer admis à une pression d'admission dans le premier cylindre soit comprimé par l'admission d'un gaz moteur 406 dans le second cylindre, ledit système 400 comprenant des moyens 408 de contrôle de la pression du gaz moteur 406 lors de son introduction dans le second cylindre.

Les moyens 408 de contrôle comprennent:

- un détecteur 410 de pression pour mesurer la pression du gaz 404 à comprimer lors de son admission dans le premier cylindre, et
- un régulateur 412 pour ajuster le débit de gaz moteur 406 dans le second cylindre de telle sorte que la pression du gaz 404 à comprimer soit maintenue à une pression constante lors de son admission dans le compresseur 402.

Dans cette réalisation, la source du gaz 414 à comprimer comprend un générateur de gaz, par exemple un réacteur chimique (non représenté) qui met en oeuvre, par exemple, une réaction d'électrolyse produisant de l'hydrogène comme décrit par Øystein Ulleberg, Torgeir Nakken et Arnaud Eté dans leur publication « The wind/hydrogen démonstration system at Utsira in Norway: Evaluation of system performance using operational data and updated hydrogen energy system modeling tools », publié le 15 Janvier 2010 dans International Journal of Hydrogen energy 35, pages 1841- 1852.

En outre les moyens 408 de contrôle maintiennent la pression du gaz 404 à comprimer constante et égale à la pression de production de la source 414 de gaz à comprimer en entrée du premier cylindre du compresseur 402.

A cet effet les moyens 408 de contrôle comprennent un réservoir tampon 416 de gaz à comprimer, situé en aval de la source 414 du gaz à comprimer et en amont du compresseur 402, la pression du gaz 404 à comprimer étant constante dans ledit réservoir tampon 416.

Dans d'autres variantes non représentées, le réservoir tampon 416 peut être formé par des conduits de distribution du gaz à comprimer, la pression du gaz à comprimer étant constante dans une section desdits conduits de distribution reliée au compresseur 402.

Dans tous les cas, une sonde 418, située dans le réservoir tampon 416, est reliée au détecteur 410 de pression, ce qui permet à ce dernier de déterminer la pression du gaz 404 en entrée du compresseur et d'informer le contrôleur 412 afin que ce dernier modifie le débit de gaz moteur 406, via une commande 420 sur son réseau de distribution, telle que la pression du gaz 404 à comprimer en entrée du compresseur 402 soit maintenue constante et égale à la pression de production de la source 414 de gaz à comprimer.

Typiquement, le système 408 permet de maintenir un débit minimal de consommation de gaz moteur juste nécessaire à la compression du débit de production fourni par la source 414.

Comme représenté sur la figure 5, le rendement 500 d'un système de compression à gaz en fonction du taux de compression 502 égale au rapport entre la pression de sortie du gaz comprimé et la pression du gaz à comprimer à l'entrée du compresseur mis en oeuvre s'accroît significativement en comparant un système de compression à gaz selon l'art antérieur-courbe 504 - avec un système de compression à gaz selon l'invention-courbe 506.

Dans cet exemple, le rendement $\eta_{comp,H2}$ du système est défini en fonction de la pression d'entrée $P_{e,H2}$, respectivement de sortie $P_{s,H2}$, du gaz à comprimer - de l'hydrogène ($H_2$) - et de son débit $\dot{n}_{H2}$ à travers le compresseur.

Considérant par ailleurs que le débit du gaz moteur - de l'air - $\dot{n}_{air}$ s'effectue avec une pression d'entrée $P_{e,air}$, respectivement de sortie $P_{s,air}$, égale à 1 atmosphère par défaut, le rendement du système $\eta_{comp,H2}$ est:

$$\eta_{comp,H2} = \frac{\dot{n}_{H2}\left(\left(\dfrac{P_{e,H2}}{P_{s,H2}}\right)^{\frac{\gamma-1}{\gamma}} - 1\right)}{\dfrac{\dot{n}_{air}}{\rho_{compresseur,air}}\left(\left(\dfrac{P_{e,air}}{P_{s,air}}\right)^{\frac{\gamma-1}{\gamma}} - 1\right)}$$

où $\rho_{compresseur,air}$, est le rendement du compresseur ayant fourni l'air comprimé et $\gamma$ représente le rapport isentropique du gaz ($\gamma$ égal 1.4 pour un gaz diatomique : $H_2$, $O_2$, $N_2$ ....)

La présente invention est susceptible de nombreuses variantes, notamment relatives à la mise en oeuvre de différents types de compresseurs - surpresseurs, ou tout autre dispositif, muni d'un nombre variable de cylindres permettant d'accroître la pression d'un gaz par transmission d'énergie à partir d'un autre gaz comprimé - du gaz moteur - typiquement de l'azote ou de l'air - et du gaz comprimé.

D'une manière générale, la présente invention concerne tous les systèmes de production de gaz dont la pression de stockage en sortie de traitement est supérieure à la pression de production, typiquement la production d'hydrogène ($H_2$) et d'oxygène ($O_2$) par électrolyse de l'eau avec une source d'énergie intermittente telle que de l'énergie solaire ou éolienne.

Pour que le système de l'invention fonctionne de façon optimale, il est nécessaire que la pression du gaz à comprimer en entrée du premier cylindre soit constante. En outre, plus cette pression est élevée et plus la consommation du compresseur en gaz moteur est réduite. Ainsi, grâce au système de l'invention il est possible de maintenir une pression de gaz à comprimer en entrée du premier cylindre constante et égale (c'est-à-dire maximale) à la pression de production de la source de gaz à comprimer (c'est-à-dire la pression du générateur de gaz de la source).

Il convient de noter que la pression maximale en entrée de compresseur dépend notamment du type de source de gaz à comprimer utilisé et plus particulièrement du type de générateur de gaz à comprimer utilisé (électrolyseur HOGEN™ série S de la société « Proton Energy System » (14.8 bars), électrolyseur HOGEN™ série H de la société « Proton Energy System » (30 bars), électrolyseur HySTAT™-60 de la société Hydrogenics (10 bars), électrolyseur GENHY 5000 de la société CETH (10 bars), électrolyseur GENHY 100 de la société CETH (7 bars), ....).

Un intérêt significatif de l'invention est qu'elle propose une solution qui minimise la consommation énergétique de l'équipement servant à comprimer le gaz moteur injecté dans le « surpresseur » ou compresseur, c'est-à-dire qu'elle améliore le rendement énergétique global du système de compression, notamment aux faibles taux de compression.

De plus, cette méthode permet d'optimiser la durée de vie du « surpresseur » ou compresseur en imposant une vitesse de battement minimale ajustée pour répondre au débit de production de la source de gaz à comprimer.

Le système de compression à gaz selon l'invention trouve une application particulièrement intéressante dans le domaine de la production d'hydrogène et d'oxygène par électrolyse de l'eau.

**Revendications**

1. Système (400) de compression à gaz comprenant un compresseur (402) muni d'au moins un premier cylindre et un second cylindre associés de telle sorte qu'un gaz (404) à comprimer admis à une pression d'admission dans le premier cylindre soit comprimé par l'admission d'un gaz moteur (406) dans le second cylindre, ledit système (400) comprenant des moyens (408) de contrôle de la pression du gaz moteur (406) lors de son introduction dans le second cylindre, **caractérisé en ce que** les moyens (408) de contrôle comprennent:

   - un détecteur (410) de pression pour mesurer la pression du gaz (404) à comprimer lors de son admission dans le premier cylindre, et
   - un régulateur (412) pour ajuster le débit de gaz moteur (406) dans le second cylindre de telle sorte que la pression du gaz à comprimer (404) soit constante lors de son admission dans le premier cylindre.

2. Système (400) selon la revendication 1 **caractérisé en ce qu'**il comporte une source de gaz à comprimer (414) située en amont du premier cylindre.

3. Système (400) selon la revendication précédente **caractérisé en ce que** la source (414) du gaz à comprimer comprend un générateur de gaz.

4. Système (400) selon l'une des revendications 2 ou 3 **caractérisé en ce que** les moyens (408) de contrôle comprenant des moyens pour maintenir la pression constante du gaz (404) à comprimer en entrée du premier cylindre à une pression égale à la pression de production de la source (414) du gaz à comprimer.

5. Système (400) selon l'une des revendications 2 à 4 **caractérisé en ce que** les moyens (408) de contrôle comprennent un réservoir tampon (416) de gaz à comprimer, situé en aval de ladite source (414) du gaz à comprimer et en amont du premier cylindre, la pression du gaz (404) à comprimer étant constante dans ledit réservoir tampon (416).

6. Système (400) selon la revendication 5 **caractérisé en ce que** le réservoir tampon (416) est formé par des conduits de distribution du gaz à comprimer, la pression du gaz (404) à comprimer étant constante dans une section desdits conduits de distribution.

7. Système (400) selon la revendication 5 ou 6 **caractérisé en ce que** le détecteur (410) de pression est associé à une sonde (418) située dans le réservoir tampon (416).

8. Procédé de compression à gaz mettant en oeuvre un système (400) conforme à l'une des revendications précédentes, ce système comprenant un compresseur (402) muni d'au moins un premier cylindre et un second cylindre associés de telle sorte qu'un gaz (404) à comprimer admis à une pression d'admission dans le premier cylindre soit comprimé par l'admission d'un gaz moteur (406) dans le second cylindre, ledit système (400) comprenant des moyens (408) de contrôle de la pression du gaz moteur (406) lors de son introduction dans le second cylindre, **caractérisé en ce qu'**il comprend les étapes suivantes:

   - l'étape pour un détecteur (410) de pression de mesurer la pression du gaz (404) à comprimer lors de son admission dans le premier cylindre, et
   - l'étape pour un régulateur (412) d'ajuster le débit de gaz moteur (406) dans le second cylindre de telle sorte que la pression du gaz à comprimer (404) soit constante lors de son admission dans le premier cylindre.

**Patentansprüche**

1.  Gaskompressionssystem (400), umfassend einen Kompressor (402), der mit wenigstens einem ersten Zylinder und einem zweiten Zylinder versehen ist, die derart zugeordnet sind, dass ein zu komprimierendes Gas (404), das mit einem Einlassdruck in den ersten Zylinder eingelassen wird, durch den Einlass eines Motorgases (406) in den zweiten Zylinder komprimiert wird, wobei das genannte System (400) Kontrollmittel (408) des Drucks des Motorgases (406) bei seiner Einführung in den zweiten Zylinder umfasst, **dadurch gekennzeichnet, dass** die Kontrollmittel (408) umfassen:

    - einen Druckdetektor (410) zum Messen des Drucks des zu bei seinem Einlassen in den ersten Zylinder zu komprimierenden Gases (404) und;
    - einen Regler (412) zum Anpassen des Durchsatzes des Motorgases (406) in dem zweiten Zylinder derart, dass der Druck des zu komprimierenden Gases (404) bei seinem Einlass in den ersten Zylinder konstant ist.

2.  System (400) gemäß Anspruch 1, **dadurch gekennzeichnet, dass** es eine Quelle des zu komprimierenden Gases (141) umfasst, die sich oberhalb des ersten Zylinders befindet.

3.  System (400) gemäß dem voranstehenden Anspruch, **dadurch gekennzeichnet, dass** die Quelle (414) des zu komprimierenden Gases einen Gasgenerator umfasst.

4.  System (400) gemäß Anspruch 2 oder 3, **dadurch gekennzeichnet, dass** die Kontrollmittel (408) Mittel zur Aufrechterhaltung des konstanten Drucks des am Eingang des ersten Zylinders zu komprimierenden Gases (404) mit einem Druck umfassen, der gleich dem Produktionsdruck der Quelle (414) des zu komprimierenden Gases ist.

5.  System (400) gemäß Anspruch 2 bis 4, **dadurch gekennzeichnet, dass** die Kontrollmittel (408) einen Puffertank (416) für zu komprimierendes Gas umfassen, der sich unterhalb der genannten Quelle (414) des zu komprimierenden Gases und oberhalb des ersten Zylinders befindet, wobei der Druck des zu komprimierenden Gases (404) in dem genannten Puffertank (416) konstant ist.

6.  System (400) gemäß Anspruch 5, **dadurch gekennzeichnet, dass** der Puffertank (416) durch Verteilerleitungen des zu komprimierenden Gases gebildet wird, wobei das zu komprimierende Gas (404) in einem Abschnitt der genannten Verteilerleitungen konstant ist.

7.  System (400) gemäß Anspruch 5 oder 6, **dadurch gekennzeichnet, dass** der Druckdetektor (410) einer Sonde (418) zugeordnet ist, die sich im Puffertank (416) befindet.

8.  Gaskompressionsverfahren, das ein System (400) gemäß einem der voranstehenden Ansprüche umsetzt, wobei dieses System einen Kompressor (402) umfasst, der wenigstens mit einem ersten Zylinder und einem zweiten Zylinder versehen ist, die derart zugeordnet sind, dass ein zu komprimierendes Gas (404), das in einem Einleitungsdruck in den ersten Zylinder eingeleitet wird, durch das Einleiten eines Motorgases (406) in den zweiten Zylinder komprimiert wird, wobei das genannte System (400) Kontrollmittel (408) des Drucks des Motorgases (406) bei seiner Einführung in den zweiten Zylinder umfasst, **dadurch gekennzeichnet, dass** es die folgenden Schritte umfasst:

    - den Schritt, in dem ein Druckdetektor (410) den Druck des bei seinem Einlass in den ersten Zylinder zu komprimierenden Gases (404) misst und;
    - den Schritt, in dem ein Regler (412) den Durchsatz des Gasmotors (406) in dem zweiten Zylinder derart anpasst, dass der Druck des zu komprimierenden Gases (404) bei seinem Einlass in den ersten Zylinder konstant ist.

**Claims**

1.  A gas compression system (400) comprising a compressor (402) provided with at least a first cylinder and a second cylinder associated such that a gas (404) to be compressed taken in at an intake pressure in the first cylinder is compressed by taking in a motive gas (406) in the second cylinder, said system (400) comprising means (408) for monitoring the pressure of the motive gas (406) when it is introduced in the second cylinder, **characterised in that** the monitoring means (408) comprise:

    - A pressure detector (410) for measuring the pressure of the gas (404) to be compressed when it is taken in in the first cylinder, and
    - a regulator (412) for adjusting the flow rate of the motive gas (406) in the second cylinder such that the pressure of the gas to be compressed (404) is constant when taken in in the first cylinder.

2.  The system (400) according to claim 1, **characterised in that** it includes a source of gas to be compressed (414) located upstream the first cylinder.

3.  The system (400) according to the preceding claim, **characterised in that** the source (414) of the gas to be compressed comprises a gas generator.

4. The system (400) according to one of claims 2 or 3, **characterised in that** the monitoring means (408) comprise means for keeping the constant pressure of the gas (404) to be compressed at the inlet of the first cylinder at a pressure equal to the pressure for producing the source (414) of the gas to be compressed.

5. The system (400) according to one of claims 2 to 4, **characterised in that** the monitoring means (408) comprise a surge tank (416) of the gas to be compressed, located downstream of said source (414) of the gas to be compressed and upstream of the first cylinder, the pressure of the gas (404) to be compressed being constant in said surge tank (416).

6. The system (400) according to claim 5, **characterised in that** the surge tank (416) is formed by distributing ducts of the gas to be compressed, the pressure of the gas (404) to be compressed being constant in a section of said distributing ducts.

7. The system (400) according to claim 5 or 6, **characterised in that** the pressure detector (410) is associated with a probe (418) located in the surge tank (416).

8. A method for compressing a gas implementing a system (400) in accordance with one of the preceding claims, this system comprising a compressor (402) provided with at least a first cylinder and a second cylinder associated such that a gas (404) to be compressed taken in at an intake pressure in the first cylinder is compressed by taking in a motive gas (406) in the second cylinder, said system (400) comprising means (408) for monitoring the pressure of the motive gas (406) when it is introduced in the second cylinder, **characterised in that** it comprises the following steps:

   - The step for a pressure detector (410) of measuring the pressure of the gas (404) to be compressed when taken in in the first cylinder, and
   - the step for a regulator (412) of adjusting the flow rate of the motive gas (406) in the second cylinder such that the pressure of the gas to be compressed (404) is constant when taken in in the first cylinder.

Fig. 1

Fig. 2

Fig. 3

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 5490766 A

**Littérature non-brevet citée dans la description**

•   **ØYSTEIN ULLEBERG ; TORGEIR NAKKEN ; ARNAUD ETÉ.** The wind/hydrogen démonstration system at Utsira in Norway: Evaluation of system performance using operational data and updated hydrogen energy system modeling tools. *International Journal of Hydrogen energy,* 15 Janvier 2010, vol. 35, 1841-1852